# EUROPEAN PATENT SPECIFICATION

(11) **EP 4 617 132 B1**
(45) Date of publication and mention of the grant of the patent: **09.12.2026**
(21) Application number: 23903040.6
(22) Date of filing: 30.08.2023
(51) Int. Cl.: G05D 1/617, B60P 3/00, B60Q 1/50, B60W 10/20, B60W 10/184, B60W 30/10, B60W 30/18, B60W 40/06, B60W 60/00, B65F 3/00, B60Q 1/48, G05D 105/28, G05D 107/13, G05D 109/10

(54) **CONTROL SYSTEM FOR SELF-DRIVING VEHICLE**
STEUERUNGSSYSTEM FÜR SELBSTFAHRENDES FAHRZEUG
SYSTÈME DE COMMANDE POUR VÉHICULE AUTONOME

(30) Priority: 13.12.2022 JP 2022198318
(43) Date of publication of application: 17.09.2025
(73) Proprietor: Daimler Truck AG, 70771 Leinfelden-Echterdingen (DE)
(72) Inventor: SATO, Hiromitsu, Kawasaki-shi, Kanagawa 211-8522 (JP)
(74) Representative: Hofstetter, Schurack & Partner
(86) International application number: PCT/JP2023/031405
(87) International publication number: WO 2024/127736

(56) References cited:
- CN-U- 213 746 571
- JP-A- 2017 226 371
- JP-A- 2018 184 140
- JP-A- 2018 184 140
- JP-A- 2021 049 910
- JP-A- 2021 507 420
- JP-U- 3 193 187
- US-A1- 2012 044 090
- US-A1- 2019 118 705
- US-A1- 2020 189 455
- US-A1- 2020 269 748
- US-A1- 2021 024 068
- US-A1- 2021 024 068

## Description

### [Technical Field]

The embodiment discussed herein relates to a control system for a vehicle capable of autonomous driving (self-driving).

### [Background Art]

Conventionally, as one of custom-designed vehicles equipped with an operation unit that an operator operates, a garbage vehicle (garbage collection truck) equipped with a garbage inlet as an operation unit has been known. In a garbage vehicle, an operator puts garbage into a garbage inlet. In relation to this, the following Patent Document 1 discloses a technique that increases an operating speed of a movable device that pushes garbage into a storage box on condition that no person (operator) is present in the vicinity of the garbage inlet. This technique says that the operational efficiency is improved while ensuring safety.

Also, Patent Document 2 discloses a parking support device which can make a third person around a vehicle recognize whether or not the vehicle is performing parking support control by irradiating a road surface. Patent Document 3 discloses a vehicle control device mounted in a vehicle that includes: a first recognizer configured to recognize a person near the vehicle; a first determiner configured to determine whether the person recognized by the first recognizer is a pre-registered user; and a controller configured to control a lighting device to project a projection image to a position for which a stop position of the vehicle is a criterion in a case where the first determiner determines that the person recognized by the first recognizer is the pre-registered user. Patent Document 4 discloses systems and methods directed to projecting a current trajectory path of the autonomous vehicle on a surface of road. Patent Document 5 discloses a technique to automate the functions of the driver of the garbage truck.

### [Citation List]

### [Patent Document]

[Patent Document 1] JP 2018-193205 A
[Patent Document 2] JP 2018-184140 A
[Patent Document 3] US 2020/269748 A1
[Patent Document 4] US 2019/0118705 A1
[Patent Document 5] US 2021/024068 A1

### [Summary of Invention]

### [Technical Problem]

In recent years, an attempt has been examined and tested for driverless driving such a vehicle equipped with an operation unit by means of autonomous driving. If such driverless autonomous driving is achieved, the requirement for the operator to repetitiously get on and off the vehicle for driving the vehicle and operating the operation unit, so that the operational efficiency is expected to be enhanced.

In cases where the above vehicle equipped with an operation unit is driverless driven by means of autonomous driving using, for example, a portable terminal such as a smart phone or a tablet terminal, one of conceivable schemes automatically stops the vehicle at a stop point previously set while the vehicle is traveling and after the operator finishes an operation at the stop point, causes the vehicle to drive to a next stop point. Particularly for a garbage vehicle, when a garbage collection station is detected with a camera or a sensor mounted on the vehicle, the vehicle may stop at the stop position according to the result of the detection.

However, if a vehicle during driverless driving automatically determines the next stop position, it is difficult to achieve communication between the vehicle and the operator. For the above, as compared with the case where the driver determines the next stop position by a manual driving operation using a portable terminal, the operator may be less likely to intuitively and exactly grasp the next stop position.

With the above problems in view, one of the objects of the present embodiment is to enable a person such as an operator around the vehicle capable of autonomous driving to intuitively grasp a stop position of the vehicle.

### [Solution to Problem]

The embodiment discussed herein is made to solve at least part of the above problem and is achieved in the following embodiments and application.

(1) The control system for a vehicle capable of autonomous driving of the present application example includes: a stop position setting unit configured to set a stop position ahead of the vehicle in a traveling direction; a travel controlling unit configured to cause the vehicle to autonomously drive to the stop position set by the stop position setting unit; a projecting unit configured to project a projection element indicating the stop position by a light beam emitted from the vehicle onto a road surface while the travel controlling unit causes the vehicle to autonomously drive to the stop position; a travel route setting unit configured to set a normal route serving as a traveling path through which the vehicle is caused to autonomously drive and on which a halt place is previously set; and a stop route through which the vehicle is caused to autonomously drive from a front position of the halt place to the stop position. The travel controlling unit may be configured to cause the vehicle to autonomously drive along the normal route and along the stop route from the front position of the halt place to the stop position, and the projecting unit may be configured to project the projection element when the vehicle reaches the front position of the halt place.

According to the disclosed technique, a stop position is set ahead of a vehicle in a traveling direction and, while the vehicle is caused autonomously driving to the stop position, a projection element indicating the stop position is projected by a light beam emitted from the vehicle onto a road surface. This can visually notify an operator outside the vehicle or the surrounding person of the stop position of the vehicle in advance before the vehicle stops at the stop position. Therefore, the operator and the like can intuitively grasp the stop position of the vehicle before the vehicle stops at the stop position.

Since the projection element is projected when the vehicle reaches the front position of the halt place, the stop position of the vehicle can be grasped before the vehicle reaches the halt place.

(2) In the control system of the present application example, the travel controlling unit may be configured to cause the vehicle to temporarily stop at the front position of the halt place and then autonomously drive along the stop route, and the projecting unit may project the projection element when the vehicle temporarily stops at the front position of the halt place.

With this configuration, the projection element is projected when the vehicle briefly stops at the front position of the halt place. Consequently, the operator can check the stop position of the vehicle with ample time, and can more easily grasp the stop position of the vehicle.

(3) In the control system of the present application example, the projecting unit may be configured to project the projection element on an area of a substantially same size as the vehicle when viewed from above. In this situation, the operator and the like easily grasp the area over which the vehicle is to actually stop.
(4) In the control system of the present application example, the projecting unit may include a front projector arranged on a front bumper of the vehicle. The front projector makes it easy to project the projection element onto the front side of the vehicle or directly under the front end of the vehicle.
(5) In the control system of the present application example, the projecting unit may include a rear projector arranged on a rear bumper of the vehicle, and may be configured to project the projection element onto a road surface on a rear side of the vehicle after the travel controlling unit stops the vehicle at the stop position.

This configuration projects the projection element onto the road surface on the rear side of the vehicle after the vehicle stops at the stop position. Therefore, the operator who exists behind the vehicle after the vehicle stops can easily confirm and grasp the stop position of the vehicle. Furthermore, the rear projector, which is arranged on the rear bumper of the vehicle, easily projects the projection element directly under the rear end of the vehicle.

(6) In the control system of the present application example, the vehicle may include an operation unit for an operation made by an operator.
(7) Specifically, the vehicle may be a garbage vehicle including a garbage inlet at a rear portion of the vehicle, the garbage inlet serving as the operation unit.

In such a vehicle, by projecting the projection element onto the road surface before the vehicle is stopped to make it possible to grasp the stop position, the operator can smoothly perform the operation on the operation unit while the vehicle is stopping. This can enhance the operational efficiency. For example, if the vehicle is a garbage vehicle, the garbage collection efficiencies can be increased.

(8) The control system of the present application example may further include a camera configured to take an image around the vehicle, and the stop position setting unit may be configured to set the stop position with reference to information of the image taken by the camera. This configuration makes it possible to set an appropriate stop position based on the surrounding state of the vehicle.
(9) The control system of the present application example may further include a camera configured to take an image around the vehicle, and the stop position setting unit may be configured to set, when detecting garbage accumulated at a garbage collection station existing ahead of the traveling direction of the vehicle by means of the camera, the stop position based on a position of the detected garbage. In this case, on the basis of the actual position of garbage at the garbage collection station, an appropriate stop position at which the operator can easily carry out a garbage collection operation can be set.

### [Advantageous Effects of Invention]

According to the present embodiment, a person such as an operator around the vehicle capable of autonomous driving can intuitively grasp a stop position of the vehicle.

### [Brief Description of Drawings]

FIG. 1 is a block diagram showing a configuration of an autonomous driving vehicle that mounts thereon a control system according to an application example.
FIG. 2 is a schematic side view of a garbage vehicle serving as the autonomous driving vehicle of FIG. 1.
FIG. 3 is a diagram showing driverless driving (autonomous driving control) in a control system for a autonomous driving vehicle.
FIGs. 4A-4C are diagrams showing projection control in the control system for a autonomous driving vehicle.
FIG. 5 is a flow chart showing an example of projection control and autonomous driving control in the control system for the autonomous driving vehicle of FIG. 1.
FIG. 6 is a flow chart showing an example of a garbage detecting process in the control system for the autonomous driving vehicle of FIG. 1.

### [Description of Embodiments]

In an application example of the control system for a vehicle capable of autonomous driving (self-driving), the system shows a stop position to the surroundings (for example, an operator outside the vehicle) at a front position, which is located in a near side of the stop position, when the autonomous driving vehicle is about to stop.

The vehicle according to this application is a vehicle (truck, bus, car) and the like capable of autonomous driving. Here, the vehicle capable of autonomous driving is not manually driven by a driver having a driver's seat but has a function of autonomously driving. In the vehicle capable of autonomous driving in an autonomously driving control, an in-vehicle control device performs acceleration control, steering control, and braking control, and causes the vehicle to drive in place of manual driving manipulation made by the driver.

In the following explanation, a direction in which a vehicle 1 moves forward is referred to as frontward (represented by the symbol "FR" in the drawings), the opposite direction (the reverse direction of the vehicle) is referred to as rearward ("RR"). In addition, the left and the right are defined on the basis of a state where the vehicle directs frontward. In the drawings, "LH" indicates "left-hand", "RH" indicates " right-hand", "UP" indicates "upward", and "DW" indicates "downward".

### 1. Configuration

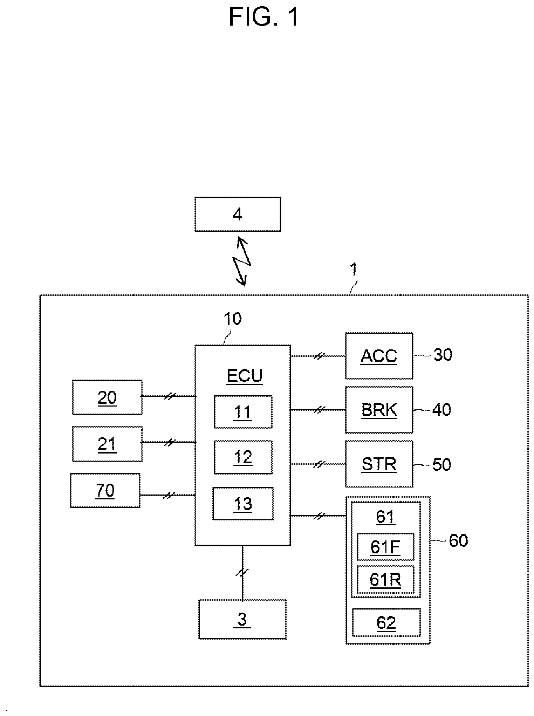

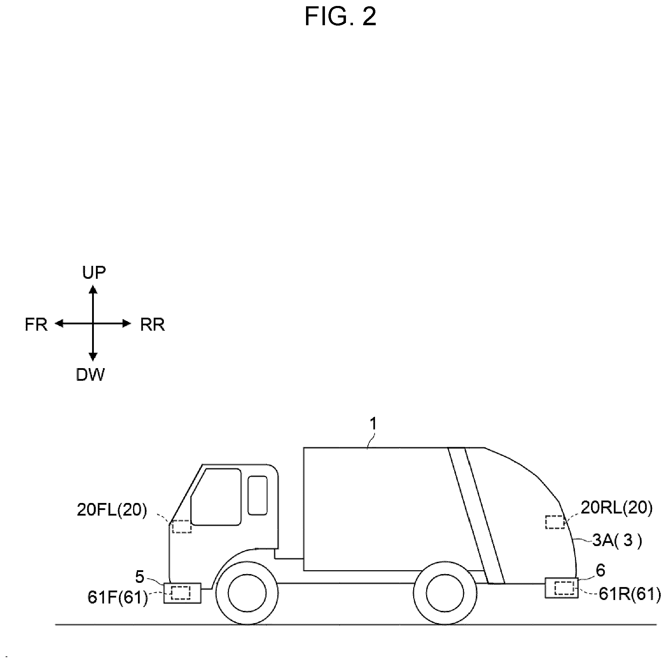

FIG. 1 is a block diagram illustrating a configuration of an autonomous driving vehicle 1 (also referred to as "vehicle 1") including a control system (a control system for a vehicle capable of autonomous deriving) according to the present application example. FIG. 2 is a schematic view of the vehicle 1 viewed from a side face.

The vehicle 1 has a function (autonomous driving function, self-driving function) capable of autonomously driving without requiring manual driving manipulation by a driver, and has an operation unit 3 with which an operator performs an operation. In this description, the driving of the vehicle 1 by means of the autonomous driving is referred to as "autonomous driving" or "self-driving". The operator is an occupant of the vehicle 1 and is a person who performs an operational work using the operation unit 3.

In this application example, as shown in FIG. 2, the vehicle 1 is assumed to be a garbage vehicle having a garbage inlet 3A as the operation unit 3.

In addition to the operation unit 3, the control system of the vehicle 1 is provided with a control device 10 that controls the vehicle 1, a camera 20, various sensors 21, an accelerator device ("ACC" in the drawing) 30, a brake device ("BRK" in the drawing) 40, a steering device ("STR" in the drawing) 50, a projection system (projecting unit) 60, and a communication device 70. The control device 10 is, for example, an electronic control unit (ECU) configured as an LSI device or an embedded electronic device in which a microprocessor, a ROM (read only memory), a RAM (random access memory), and another element are integrated. The control device 10 performs the autonomous driving control and the emitting control to be detailed below by executing a software program stored in the memory device such as the ROM or the RAM. The control device 10 may be configured as a part of a Vehicle Control Unit (VCU) that overall controls various devices included in the vehicle 1, or may be configured as an electronic control unit different from the VCU.

The camera 20 is an image photographing device (image sensor) that take still or moving images around the vehicle 1. The surrounding state of the vehicle 1 can be accurately grasped by analyzing the image photographed by the camera 20.

For example, plural cameras 20 are disposed one at each of the four corners of the vehicle 1, i.e., the right side of the front end, the left side of the front end, the right side of the rear end, and the left side of the rear end. In FIG. 2, a camera 20FL on the left side of the front end and a camera 20RL on the right side of the rear end of the cameras 20 at the four corners are illustrated, and the others are omitted. As shown in FIG. 2, the cameras 20 are disposed substantially at the center in the up-down direction of the vehicle 1. By arranging the cameras 20 at the four corners of the vehicle 1 and substantially at the center in the up-down direction, the surrounding including the vicinity of the vehicle 1 can be grasped with high accuracy.

The vehicle 1 is provided with various sensors 21 in addition to the cameras 20. The various sensors 21 include, as sensors for acquiring information to be used for autonomous driving control of the vehicle 1, a radar, a GNSS (global navigation satellite system), a vehicle speed sensor, an acceleration rate sensor, an accelerator position sensor, a brake sensor, a steering angle sensor, and the like.

The information (image data) captured by the cameras 20 and information (detection signals) detected by the various sensors 21 are input into the control device 10.

The communication device 70 is an electronic control device that wirelessly communicates with an external device of the vehicle 1. The communication counterparts of the communication device 70 of the present embodiment include a portable terminal 4 carried by the operator. The portable terminal 4 is a portable communication terminal device, such as a mobile telephone (smart phone) or a tablet terminal. The communication device 70 inputs information received from the portable terminal 4 into the control device 10 and also transmits information received from the control device 10 to the portable terminal 4.

The accelerator device 30, the brake device 40, and the steering device 50 are devices controlled by the control device 10 when the vehicle 1 is autonomously driving. For example, when the autonomous driving mode is set, the control device 10 calculates a target output (target torque), a target vehicle speed, a target steering angle, and the like of the vehicle 1, and carries out autonomous driving of the vehicle 1 (driverless driving) by controlling the accelerator device 30, the brake device 40, and the steering device 50. The description of these devices 30, 40, and 50 will be omitted.

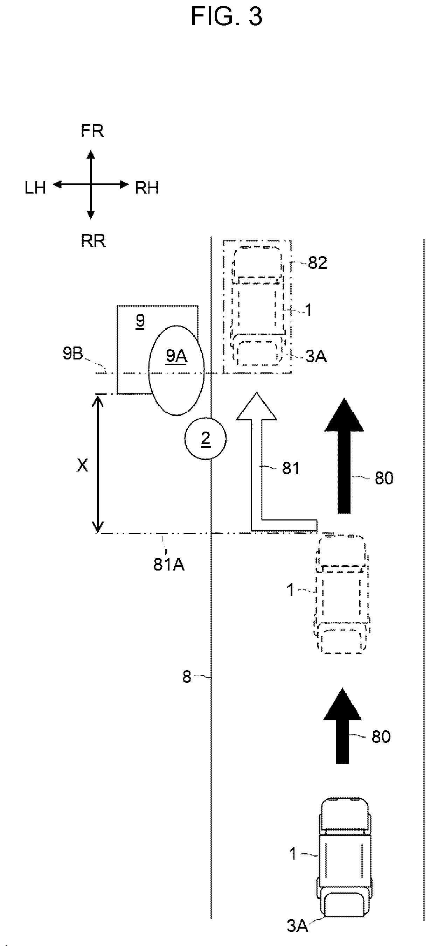

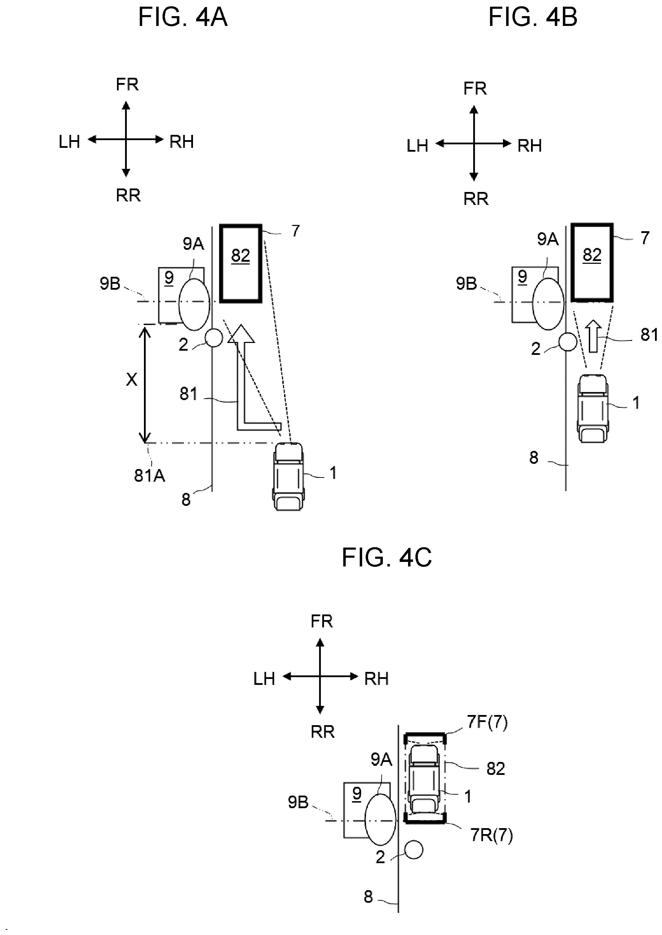

The projection system 60 is a system that projects a projection element (reference sign 7 in FIGs. 4A-4C) indicating a stop position (reference sign 82 in FIGs. 3 and 4A-4C) of the vehicle 1 by a light beam emitted from the vehicle 1 onto a road surface, and includes a projector 61 and a projection controlling unit 62.

The projector 61 is a device that emits a light beam forming a projection element (reference sign 7 in FIGs. 4A-4C) from the vehicle 1 onto a road surface. As the projector 61, any known light source body such as a LED illuminator (light emitting diode illuminator) or an optical image casting device may be used.

As shown in FIG. 2, the projector 61 includes a front projector 61F arranged on the front bumper 5 of the vehicle 1 and a rear projector 61R arranged on the rear bumper 6 of the vehicle 1.

The projection controlling unit 62 controls the projector 61 to project, onto a road surface, a projection element (reference sign 7 in FIGs. 4A-4C) indicating the stop position (reference sign 82 in FIGs. 3 and 4A-4C) of the vehicle 1. The projection controlling unit 62 is provided, for example, as software executed by using hardware resources of the electronic control unit. In FIG. 1, the projection controlling unit 62 is provided separately from the control device 10, but the projection controlling unit 62 may be provided in the control device 10.

### 2. Control

The vehicle 1 carries out projection control that continuously projects a projection element (reference sign 7 in FIGs. 4A-4C) onto a road surface at least while the vehicle is autonomously driving to a stop position (reference sign 82 in FIGs. 3 and 4) set ahead of the vehicle 1 in the traveling direction. This notifies the operator of the vehicle 1 about the stop position (reference sign 82 in FIGS. 3 and 4A-4C) of the vehicle 1 in advance before the vehicle 1 actually stops.

As shown in FIG. 1, as functional elements that accomplishes the projection control, a travel route setting unit 11, a stop position setting unit 12, and a travel controlling unit 13 are provided in the control device 10. The functional elements 11 to 13 in the control device 10 indicate classification of the functions of the control device 10 for convenience. The functional elements 11 to 13 are provided, for example, as software executed by using the hardware resources of the control device 10. In the projection system 60, the above-described projection controlling unit 62 is provided as a functional element that performs the projection control.

To the input side of the control device 10, the cameras 20 and various sensors 21 are connected. To the output side of the control device 10, the accelerator device 30, the brake device 40, the steering device 50, and the projection system 60 are connected. The communication device 70 is connected to the input side and the output side of the control device 10.

Hereinafter, description will now be made in relation to the projection control appropriately with reference to FIG. 3 and FIGs. 4A-4C. In these drawings, the vehicle 1 automatically driving along a road 8 is to be stopped at a stop position 82 in the vicinity of a garbage collection station 9 set around the road shoulder of the road 8. In FIG. 3 and FIGs. 4A-4C, a circle with a reference sign 2 indicates an operator who performs an operational work using the garbage inlet 3A (operation unit 3) of the vehicle 1, and an ellipse with a reference sign 9A indicates garbage accumulated in the garbage collection station 9.

The travel route setting unit 11 sets a normal route 80 through which the vehicle 1 is caused to autonomously drive along the road 8 and a stop route (a vehicle stop route) 81 that is branched from the normal route 80 and that causes the vehicle 1 to autonomously drive to the stop position 82.

The normal route 80 is a traveling path from a certain starting point to a certain destination point. In FIG. 3, the normal route 80 is indicated by a bold black arrow. On the normal route 80, one or more halt places are preset. A halt place is a site (geographic location) predefined as a scheduled stop place on the normal route 80.

When it comes to a garbage vehicle, examples of the normal route 80 would include a loop path starting from a garbage treatment plant, traveling around multiple garbage collection stations 9, and then returning to the garbage treatment plant. In this case, the multiple garbage collection stations 9 located on the loop path are set as the halt places on the normal route 80. The information of the normal route 80 and garbage collection stations (halt places) 9 located on the normal route 80 can be set based on map data of a non-illustrated GNSS.

The stop route 81 is a route through which the vehicle 1 is caused to autonomously drive from a front position to the stop position 82 to be described below. The front position is located in a near side of the garbage collection station (halt place) 9. The stop route 81 is a traveling path that branches from the normal route 80 toward the stop position 82. In FIGs. 3 and 4A-4C, the stop route 81 is indicated by a bold white arrow.

A switching point 81A (the front position) at which the stop route 81 branches from the normal route 80 is set at a position on the front side by a predetermined distance X from a garbage collection station 9. The switching point 81A can be set based on map data of the non-illustrated GNSS. In FIG. 3, the vehicle 1 that has reached the switching point 81A is indicated by a dashed line.

The stop position setting unit 12 sets the stop position 82 ahead of the vehicle 1 in the traveling direction.

The stop position 82 is a position at which the vehicle 1 is stopped in the vicinity of the garbage collection station 9 and the operator 2 carries out a garbage collecting operation. For this purpose, the stop position setting unit 12 detects garbage 9A accumulated at the garbage collection station 9 existing ahead of the vehicle 1 in the traveling direction on the basis of the image information inputted from the cameras 20, and sets the stop position 82 based on the position of the detected garbage 9A. Specifically, the stop position 82 is set such that the rear end of the vehicle 1, that is, the garbage inlet 3A (the operation unit 3), is located at a substantially center position 9B along the traveling direction of vehicle 1 in the garbage 9A.

The shape and the size of the stop position 82 are set considering the shape and the size of the vehicle 1. Specifically, the stop position 82 is set to an area having substantially the same size as the vehicle 1 when viewed from above, in other words, an area overlapping at least the entire length (in the vehicle length direction) and the entire width (in the vehicle width direction) of the vehicle 1 in a top view. For example, in FIG. 3, the stop position 82 is set as a rectangular frame-shaped area surrounding outer circumference of the vehicle 1 when viewed from above.

The stop position setting unit 12 constantly obtains image information from the cameras 20 during the autonomous driving of the vehicle 1. Therefore, during the autonomous driving of the vehicle 1, the stop position setting unit 12 can constantly detect garbage based on the image information obtained from the cameras 20, and constantly set (update) the stop position 82 based on the result of the detection. Therefore, as compared with the information of the garbage collection station (halt place) 9 preset on the basis of the map data, it can be said that the stop position 82 set or updated in the above manner is one which is set in real-time such that the operator can easily carry out a garbage collection operation based on the actual position of the garbage.

A known technique such as an image recognition technique using AI may be applied for detecting garbage on the basis of image information.

The travel controlling unit 13 performs autonomous driving control along the normal route 80 and the stop route 81 set by the travel route setting unit 11 on the basis of the information from the cameras 20 and the various sensors 21.

The autonomous driving control performed by the travel controlling unit 13 of the present embodiment includes three modes of a normal mode, a pause (brief stop) mode, and a stop mode. In the normal mode, the vehicle 1 is caused to autonomously drive along the normal route 80. In the pause mode, the vehicle 1 is paused (stopped briefly) at the switching point 81A. In the stop mode, the vehicle 1 is caused to autonomously drive from the switching point 81A to the stop position 82 and stop at the stop position 82. For specific control of the accelerator device 30, the brake device 40, and the steering device 50 in each mode, a well-known autonomous driving technique is applied. In addition, the stop route 81 of FIGs. 3 and 4A-4C is drawn on a straight line for simplicity in the drawings, but actually moves on a curved line so that the vehicle 1 moves smoothly.

As described above, the projection controlling unit 62 controls the projector 61 to project the projection element 7 indicating the stop position 82 onto the road surface. The projection element 7 shows the position (range) on the road surface of the stop position 82 set by the stop position setting unit 12 with a light beam emitted from the projector 61 onto the load surface so that the operator 2 can visually recognize the position (area). That is, the projection element 7 is projected so as to overlap at least part of the stop position 82 set by the stop position setting unit 12.

In the example of FIG. 3, a rectangular frame-shape projection element 7 is projected along the outline of the rectangular frame-shape area set to be the stop position 82. In FIG. 3, the vehicle 1 stopped at the stop position 82 is indicated by a dashed line.

The projection controlling unit 62 projects the projection element 7 at least while the vehicle 1 is autonomously driving from the switching point 81A to the stop position 82.

Specifically, as shown in FIG. 4A, the projection controlling unit 62 controls the front projector 61F to project the projection element 7 when the travel controlling unit 13 briefly stops the vehicle 1 at the switching point 81A (in the pause mode).

Further, as shown in FIG. 4B, the projection controlling unit 62 controls the front projector 61F to project the projection element 7 while the travel controlling unit 13 causes the vehicle 1 to autonomously drive along the stop route 81 to the stop position 82.

Further, as shown in FIG. 4C, the projection controlling unit 62 controls the front projector 61F and the rear projector 61R to project the projection element 7 after the travel controlling unit 13 stops the vehicle 1 at the stop position 82. While the vehicle 1 is stopped at the stop position 82, the vehicle 1 overlaps the stop position 82 when viewed from above. Therefore, the front projector 61F projects the front part 7F of the projection element 7, and the rear projector 61R projects the rear part 7R of the projection element 7. The front part 7F is projected onto the road surface ahead of the vehicle 1 (more specifically, directly under the front end of the vehicle 1), and the rear part 7R is projected onto the road surface behind the vehicle 1 (more specifically, directly under the rear end of the vehicle 1).

That is, the projection controlling unit 62 controls the projector 61 to project the projection element 7 onto the road surface during a time period in which, after the vehicle 1 pauses (briefly stops) at the switching point 81A, the vehicle 1 autonomously drives along the stop route 81 to the stop position 82 and then stops at the stop position 82. Here, as described above, the stop position setting unit 12 constantly updates the stop position 82 based on the image information acquired from the cameras 20. Consequently, the projection controlling unit 62 can project the projection element 7 onto the stop position 82 which is constantly updated as the vehicle 1 proceeds.

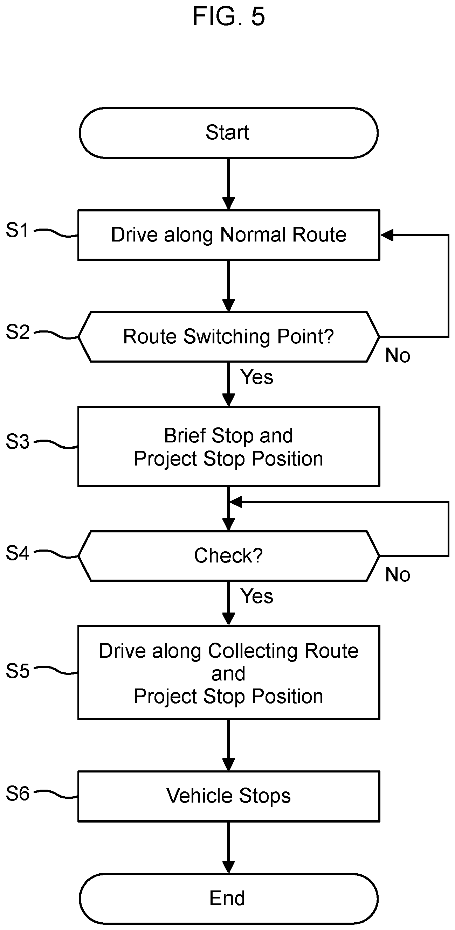

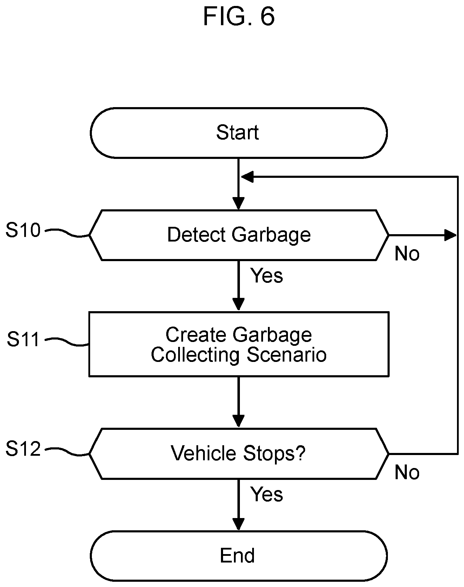

FIG. 5 is a flow chart for explaining an example of the autonomous driving control and the projection control performed by the control system. FIG. 6 is a flow chart for explaining an example of a garbage detecting process performed by the control system.

The flow charts in FIGs. 5 and 6 shall be started when the vehicle 1 starts autonomous driving and terminated when the vehicle 1 stops at the stop position 82. This means that the flowcharts of FIGs. 5 and 6 are performed in parallel.

First, description will now be made in relation to the garbage detecting process with reference to FIG. 6.

The garbage detecting process of FIG. 6 is a process that starts when the vehicle 1 starts autonomous driving as described above. The process is repeatedly executed while the vehicle 1 is automatically driving. The process ends when the vehicle 1 stops at the stop position 82.

In Step S10 of FIG. 6, the stop position setting unit 12 determines whether or not garbage 9A is detected on the basis of the image information input from the cameras 20, the garbage 9A being at the garbage collection station 9 existing ahead of the vehicle 1 in the traveling direction. If no garbage 9A is detected (No in Step S10), the stop position setting unit 12 repeats the determination of Step S10.

If the garbage 9A is detected (Yes in Step S10), the stop position setting unit 12 sets the stop position 82, and also the travel route setting unit 11 sets the stop route 81 from a predetermined switching point 81A to the set stop position 82 (creation of a garbage collecting scenario) in Step S11.

The stop position setting unit 12 repeats the process of from Step S10 to Step S12 until the vehicle 1 stops at the stop position 82 (until Yes determination in Step S12). As a result, the garbage detecting process is constantly executed while the vehicle 1 is caused to autonomously drive.

Next, with reference to FIG. 5, an example of the autonomous driving control and the projection control will now be described.

In Step S1, the travel controlling unit 13 causes the vehicle 1 to autonomously drive along the normal route 80 set by the travel route setting unit 11.

In Step S2, upon receiving a signal from the travel route setting unit 11, the travel controlling unit 13 determines whether the vehicle 1 running along the normal route 80 has reached the switching point 81A. Until the vehicle 1 reaches the switching point 81A (No in Step S2), the travel controlling unit 13 repeats Step S2 while causing the vehicle 1 to autonomously drive along the normal route 80.

When the vehicle 1 reaches the switching point 81A (Yes in Step S2), the travel controlling unit 13 briefly stops the vehicle 1 at the switching point 81A and also the projection controlling unit 62 controls the front projector 61F to project the projection element 7 onto the road surface in Step S3 as shown in FIG. 4A.

In Step S4, whether the operator has checked the stop route 81 is determined. Specifically, the control device 10 sends a request to the portable terminal 4 of the operator 2 (see FIGs. 3 and 4A-4C) via the communication device 70 to prompt the operator 2 to check the stop position of the vehicle 1. On the portable terminal 4 of the operator 2 (see FIGs. 3 and 4A-4C), for example, a button image is displayed as means for replying with the completion of checking of the stop position. When visually checking the projection element 7 projected on the load surface, the operator 2 (see FIGs. 3 and 4A-4C) replies with the completion of checking of the stop position from the portable terminal 4 that the operator is carrying.

Until a checking reply is received from the portable terminal 4 of the operator 2 (No in Step S4), the control device 10 repeats Step S4. That is, the control device 10 stands by while keeping the vehicle 1 to pause at the switching point 81A.

When a checking reply is received from the portable terminal 4 of the operator 2 (Yes in Step S4), the travel controlling unit 13 causes the vehicle 1 to autonomously drive along the stop route 81 and also the projection controlling unit 62 controls the front projector 61F to project the projection element 7 onto the road surface in Step S5 as shown in FIG. 4B.

In Step S6, the travel controlling unit 13 causes the vehicle 1 to autonomously drive to the stop position 82 and stop at the stop position 82. At this time, as shown in FIG. 4C, the projection controlling unit 62 controls the rear projector 61R to project the rear part 7R of the projection element 7 onto the road surface, and controls the front projector 61F to project the front part 7F of the projection element 7 onto the road surface. Then, the process of FIG. 5 is terminated.

While the vehicle 1 is stopping, the operator 2 carries out the garbage collection operation. Then, when the garbage collection operation is completed, the vehicle 1 resumes the autonomous driving on the normal route 80 toward the next stop position 82. That is, the control system executes the processes of FIGs. 5 and 6.

### 3. Actions and Effect

The above-described embodiment brings the following advantageous effects.

The control system for a vehicle capable of autonomous driving according to the present application example sets the stop position 82 ahead of the vehicle 1 in the traveling direction, and projects the projection element 7 indicating the stop position 82 while the vehicle 1 is caused to autonomously drive and stop at the stop position 82.

Thus, for example, as illustrated in FIGs. 4A-4C, the stop position of the vehicle 1 can be visually notified to the operator 2 outside the vehicle 1 in advance before the vehicle 1 stops at the stop position 82. Therefore, the operator 2 can intuitively grasp the stop position 82 of the vehicle 1 before the vehicle 1 stops at the stop position 82.

In the control system for a vehicle capable of autonomous driving according to the present application example, the projection element 7 is projected onto a road surface when the vehicle 1 reaches the front position of the garbage collection station 9 (halt place) preset on the normal route 80. Therefore, the operator 2 can grasp the stop position 82 of the vehicle 1 before the vehicle 1 reaches the garbage collection station 9.

In the control system for a vehicle capable of autonomous travel according to the present application example, the projection element 7 is projected when the vehicle 1 temporarily stops at the front position of the garbage collection station 9. Consequently, the operator 2 can check the stop position 82 of the vehicle 1 with ample time, and can more easily grasp the stop position 82 of the vehicle 1.

In the control system for a vehicle capable of autonomous travel according to the present application example, the projection element 7 is projected on an area of a substantially same size as the vehicle 1 when viewed from above by the projection system (projecting unit) 60. Therefore, the operator 2 easily grasps the range over which the vehicle is to actually stop.

In the control system for a vehicle capable of autonomous travel according to the present application example, since the projection system 60 includes the front projector 61F installed on the front bumper 5 of the vehicle 1, the projection elements 7, 7F are easily projected on the front side of the vehicle 1 or directly under the front end of the vehicle 1.

In the control system for a vehicle capable of autonomous travel according to the present application example, the projection system 60 includes the rear projector 61R installed on the rear bumper 6 of the vehicle 1 and the projection element 7R is projected onto the rear side of the vehicle 1 after the vehicle 1 is stopped at the stop position 82. Therefore, the operator 2 who exists behind the vehicle 1 after the vehicle 1 stops can easily check and grasp the stop position 82 of the vehicle 1. Furthermore, the rear projector 61R, which is arranged on the rear bumper 6 of the vehicle 1, easily projects the projection elements 7, 7R directly under the rear end of the vehicle 1.

In the control system for a vehicle capable of autonomous driving according to the application example, the vehicle 1 includes the operation unit 3.

A conventional autonomous driving vehicle has difficulty in achieving communication between the vehicle and the operator. For the above, in a technique wherein the driver merely determines the next stop position by a manual driving operation using a portable terminal 4, the operator may be less likely to intuitively and exactly grasp the next stop position. Difficulty in grasping the next stop position would hinder smooth operation on the operation unit. Therefore, autonomous driving of a vehicle has had room for improvement of the operational efficiency.

As a solution to the above, the control system for a vehicle capable of autonomous driving according to the present application example can achieve smooth operation of the operator 2 on the operation unit 3 by projecting the projection element 7 onto the road surface before the vehicle is stopped to make it possible to grasp the stop position 82. This can enhance the operational efficiency.

For example, if the vehicle 1 is a garbage vehicle having the garbage inlet 3A at the rear of vehicle 1 as the operation unit 3, the efficiency in the garbage collection operation can be enhanced.

The control system for a vehicle capable of autonomous driving according to the present application example further includes the camera 20 that capture images around the vehicle 1 and sets the stop position 82 on the basis of the image information captured by the camera 20. This configuration makes it possible to set an appropriate stop position 82 based on the surrounding state of the vehicle 1.

For example, if the vehicle 1 is a garbage vehicle having a garbage inlet 3A at the rear side of the vehicle 1 as the operation unit 3, when the garbage 9A accumulated at the garbage collection station 9 existing ahead of the vehicle 1 in the traveling direction is detected on the basis of the image information captured by the camera 20, the stop position 82 is set on the basis of the position of the detected garbage 9A. Therefore, on the basis of the actual position of garbage 9A, an appropriate stop position 82 at which the operator 2 can easily carry out a garbage collection operation can be set.

### 4. Miscellaneous

In the above embodiment, the switching point 81A at which the stop route 81 branches from the normal route 80 is set at a position on the front side by a predetermined distance X from a garbage collection station 9, but the switching point 81A is not limited thereto. For example, the switching point 81A may be set to a position of the vehicle at a predetermined time before the vehicle 1 reaches the garbage collection station 9 on the basis of the current position of the vehicle 1, the current speed of the vehicle 1 and the position of the garbage collection station 9 in Step S11 (creation of a garbage collecting scenario) of above FIG. 6. In this alternative, in Step S2 of FIG. 5, the travel controlling unit 13 receives a signal from Step S11 (creation of a garbage collecting scenario) of above FIG. 6 and determines whether the vehicle 1 traveling along the normal route 80 has reached the switching point 81A.

In addition, the switching point 81A is not limited to the one set in advance on the basis of the position (halt place) of the garbage collection station 9 on the map, and may alternatively be set to the position on the front side by a predetermined distance X (or the position of a predetermined time before) from the position of the garbage detected by the cameras 20.

The stop position 82 is not limited to a position set on the basis of a center position 9B of the detected garbage 9A, and may alternatively be a position set on the basis of a downstream or upstream end of the garbage 9A along the traveling direction. Further, the stop position 82 is not limited to a position set on the basis of the detected garbage collection station 9, and may alternatively be a position set on the basis of the position (halt place) of the garbage collection station 9 on the map. Further, the control device 10 trained by AI (artificial intelligence) learning may determine existence of the garbage 9A in the image information captured by the cameras 20 by means of image recognition.

The shape of the projection element 7 is not limited to the rectangular frame-shape (linear shape) described above, and may be any other suitable shape, such as a plane-square shape projected in a planar shape in a range set to the stop position 82 or a shape in which only a part of the rectangular frame is projected, or the like.

The vehicle 1 is not limited to a garbage vehicle, and may alternatively be any type of car, such as a vehicle equipped with another operation unit 3, a truck, a bus, or an ordinary vehicle not having the operation unit 3.

### [Reference Signs List]

- 1: Autonomous vehicle
- 2: Operator
- 3: Operation unit
- 3A: Garbage inlet
- 4: Portable terminal
- 5: Front bumper
- 6: Rear bumper
- 7: Projection element
- 7F: Front part (projection element)
- 7R: Rear part (projection element)
- 8: Road
- 9: Garbage collection station (halt place)
- 9A: Garbage
- 9B: Center position
- 10: Control device
- 11: Travel route setting unit
- 12: Stop position setting unit
- 13: Travel controlling unit
- 20: Camera
- 21: Various sensors
- 30: Accelerator device
- 40: Brake device
- 50: Steering device
- 60: Projection system (projecting unit)
- 61: Projector
- 61F: Front projector
- 61R: Rear projector
- 62: Projection controlling unit
- 70: Communication device
- 80: Normal route
- 81: Stop route
- 81A: Switching point
- 82: Stop position

## Claims

1. A control system for a vehicle (1) capable of autonomous driving, which comprises:
a stop position setting unit (12) configured to set a stop position (82) ahead of the vehicle (1) in a traveling direction;
a travel controlling unit (13) configured to cause the vehicle (1) to autonomously drive to the stop position (82) set by the stop position setting unit (12); and
a projecting unit (60) configured to project a projection element (7) indicating the stop position (82) by a light beam emitted from the vehicle (1) onto a road surface while the travel controlling unit (13) causes the vehicle (1) to autonomously drive to the stop position (82);
**characterized in that**
the control system further comprises a travel route setting unit (11) configured to set a normal route (80) serving as a traveling path through which the vehicle (1) is caused to autonomously drive and on which a halt place (9) is previously set, and a stop route (81) through which the vehicle (1) is caused to autonomously drive from a front position (81A) of the halt place (9) to the stop position (82), wherein
the travel controlling unit (13) is configured to cause the vehicle (1) to autonomously drive along the normal route (80) and along the stop route (81) from the front position (81A) of the halt place (9) to the stop position (82), and
the projecting unit (60) is configured to project the projection element (7) when the vehicle (1) reaches the front position (81A) of the halt place (9).

2. The control system according to claim 1, wherein
the travel controlling unit (13) is configured to cause the vehicle (1) to temporarily stop at the front position (81A) of the halt place (9) and then autonomously drive along the stop route (81), and
the projecting unit (60) is configured to project the projection element (7) when the vehicle (1) temporarily stops at the front position (81A) of the halt place (9).

3. The control system according to claim 1 or 2, wherein
the projecting unit (60) is configured to project the projection element (7) on an area of a substantially same size as the vehicle (1) when viewed from above.

4. The control system according to any one of claims 1 to 3, wherein
the projecting unit (60) comprises a front projector (7F) arranged on a front bumper (5) of the vehicle (1).

5. The control system according to any one of claims 1 to 4, wherein
the projecting unit (60) comprises a rear projector (7R) arranged on a rear bumper (6) of the vehicle (1), and is configured to project the projection element (7) onto a road surface on a rear side of the vehicle (1) after the travel controlling unit (13) stops the vehicle (1) at the stop position (82).

6. The control system according to claim 1, wherein
the vehicle (1) comprises an operation unit (3) for an operation made by an operator.

7. The control system according to claim 6, wherein
the vehicle (1) is a garbage vehicle including a garbage inlet (3A) at a rear portion of the vehicle (1), the garbage inlet (3A) serving as the operation unit (3).

8. The control system according to any of claims 1 to 7, further comprising
a camera (20) configured to take an image around the vehicle (1), wherein
the stop position setting unit (12) is configured to set the stop position (82) with reference to information of the image taken by the camera (20).

9. The control system according to claim 7, further comprising
a camera (20) configured to take an image around the vehicle (1), wherein
the stop position setting unit (12) is configured to set, when detecting garbage (9A) accumulated at a garbage collection station (9) existing ahead of the traveling direction of the vehicle (1) by means of the camera (20), the stop position (82) based on a position of the detected garbage.

## Patentansprüche

1. Steuerungssystem für ein Fahrzeug (1), das zum autonomen Fahren fähig ist, das folgende Elemente umfasst:
eine Haltepositions-Einstellvorrichtung (12), die dazu eingerichtet ist, eine Halteposition (82) vor dem Fahrzeug (1) in Fahrtrichtung festzulegen;
eine Fahrsteuerungseinheit (13), die dazu eingerichtet ist, das Fahrzeug (1) zu veranlassen, autonom zu der von der Haltepositions-Einstellvorrichtung (12) festgelegten Halteposition (82) zu fahren; und
eine Projektionseinheit (60), die dazu eingerichtet ist, ein die Halteposition (82) anzeigendes Projektionselement (7) mittels eines vom Fahrzeug (1) ausgesendeten Lichtstrahls auf eine Fahrbahnoberfläche zu projizieren, während die Fahrsteuerungseinheit (13) das Fahrzeug (1) veranlasst, autonom zur Halteposition (82) zu fahren;
**dadurch gekennzeichnet, dass**
das Steuerungssystem ferner eine Fahrrouten-Einstellvorrichtung (11) umfasst, die dazu eingerichtet ist, eine Normalroute (80) festzulegen, die als Fahrtweg dient, auf der das Fahrzeug (1) autonom fahren soll und auf der zuvor ein Halteplatz (9) festgelegt wurde, sowie eine Halteroute (81), auf der das Fahrzeug (1) autonom von einer vorderen Position (81A) des Halteplatzes (9) zur Halteposition (82) autonom fahren soll, wobei
die Fahrsteuereinheit (13) dazu eingerichtet ist, das Fahrzeug (1) zu veranlassen, autonom entlang der normalen Route (80) und entlang der Anhalte-Route (81) von der vorderen Position (81A) des Halteplatzes (9) zur Halteposition (82) zu fahren, und
die Projektionseinheit (60) dazu eingerichtet ist, das Projektionselement (7) zu projizieren, wenn das Fahrzeug (1) die vordere Position (81A) des Halteplatzes (9) erreicht.

2. Steuerungssystem nach Anspruch 1, wobei
die Fahrsteuerungseinheit (13) dazu eingerichtet ist, das Fahrzeug (1) dazu zu veranlassen, vorübergehend an der vorderen Position (81A) des Halteplatzes (9) anzuhalten und anschließend autonom entlang der Halteroute (81) zu fahren, und
die Projektionseinheit (60) dazu eingerichtet ist, das Projektionselement (7) zu projizieren, wenn das Fahrzeug (1) vorübergehend an der vorderen Position (81A) des Halteplatzes (9) anhält.

3. Steuerungssystem nach Anspruch 1 oder 2, wobei
die Projektionseinheit (60) dazu eingerichtet ist, das Projektionselement (7) auf eine Fläche zu projizieren, die von oben betrachtet im Wesentlichen die gleiche Größe wie das Fahrzeug (1) hat.

4. Steuerungssystem nach einem der Ansprüche 1 bis 3, wobei
die Projektionseinheit (60) einen Frontprojektor (7F) umfasst, der an einer Frontstoßstange (5) des Fahrzeugs (1) angeordnet ist.

5. Steuerungssystem nach einem der Ansprüche 1 bis 4, wobei
die Projektionseinheit (60) einen an einer hinteren Stoßstange (6) des Fahrzeugs (1) angeordneten Heckprojektor (7R) umfasst und dazu eingerichtet ist, dass sie das Projektionselement (7) auf eine Fahrbahnoberfläche auf der Rückseite des Fahrzeugs (1) projiziert, nachdem die Fahrsteuerungseinheit (13) das Fahrzeug (1) an der Halteposition (82) zum Stillstand gebracht hat.

6. Steuerungssystem nach Anspruch 1, wobei
das Fahrzeug (1) eine Bedieneinheit (3) für eine von einem Bediener vorgenommene Bedienung umfasst.

7. Steuerungssystem nach Anspruch 6, wobei
das Fahrzeug (1) ein Müllfahrzeug mit einer Müllzuladeöffnung (3A) im hinteren Bereich des Fahrzeugs (1) ist, wobei die Müllzuladeöffnung (3A) als Bedieneinheit (3) dient.

8. Steuerungssystem gemäß einem der Ansprüche 1 bis 7, das ferner umfasst
eine Kamera (20), die dazu eingerichtet ist, ein Bild der Umgebung des Fahrzeugs (1) aufzunehmen, wobei
die Haltepositions-Einstellvorrichtung (12) dazu eingerichtet ist, die Halteposition (82) unter Bezugnahme auf Informationen des von der Kamera (20) aufgenommenen Bildes festzulegen.

9. Steuerungssystem nach Anspruch 7, das ferner umfasst
eine Kamera (20), die dazu eingerichtet ist, ein Bild der Umgebung des Fahrzeugs (1) aufzunehmen, wobei
die Haltepositions-Einstellvorrichtung (12) dazu eingerichtet ist, wenn mittels der Kamera (20) an einer vor der Fahrtrichtung des Fahrzeugs (1) liegenden Müllsammelstelle (9) angesammelter Müll (9A) erkannt wird, die Halteposition (82) basierend auf einer Position des erkannten Mülls festzulegen.

## Revendications

1. Système de commande pour un véhicule (1) capable de conduite autonome, qui comporte :
une unité de réglage de position d'arrêt (12) configurée pour régler une position d'arrêt (82) à l'avant du véhicule (1) dans une direction de déplacement ;
une unité de commande de déplacement (13) configurée pour amener le véhicule (1) à se conduire de manière autonome jusqu'à la position d'arrêt (82) réglée par l'unité de réglage de position d'arrêt (12) ; et
une unité de projection (60) configurée pour projeter un élément de projection (7) indiquant la position d'arrêt (82) par un faisceau lumineux émis à partir du véhicule (1) sur une surface de route pendant que l'unité de commande de déplacement (13) amène le véhicule (1) à se conduire de manière autonome jusqu'à la position d'arrêt (82) ; **caractérisé en ce que**
le système de commande comporte en outre une unité de définition d'itinéraire de déplacement (11) configurée pour définir un itinéraire normal (80) servant de trajet de déplacement par lequel le véhicule (1) est amené à se conduire de manière autonome et sur lequel un lieu de pause (9) est préalablement défini, et un itinéraire d'arrêt (81) par lequel le véhicule (1) est amené à se conduire de manière autonome d'une position avant (81A) du lieu de pause (9) à la position d'arrêt (82),
l'unité de commande de déplacement (13) étant configurée pour amener le véhicule (1) à se conduire de manière autonome le long de l'itinéraire normal (80) et le long de l'itinéraire d'arrêt (81) de la position avant (81A) du lieu de pause (9) à la position d'arrêt (82), et
l'unité de projection (60) étant configurée pour projeter l'élément de projection (7) lorsque le véhicule (1) atteint la position avant (81A) du lieu de pause (9).

2. Système de commande selon la revendication 1, dans lequel
l'unité de commande de déplacement (13) est configurée pour amener le véhicule (1) à s'arrêter temporairement au niveau de la position avant (81A) du lieu de pause (9), et à se conduire ensuite de manière autonome le long de l'itinéraire d'arrêt (81), et
l'unité de projection (60) est configurée pour projeter l'élément de projection (7) lorsque le véhicule (1) s'arrête temporairement au niveau de la position avant (81A) du lieu de pause (9).

3. Système de commande selon la revendication 1 ou 2, dans lequel
l'unité de projection (60) est configurée pour projeter l'élément de projection (7) sur une zone ayant une taille sensiblement identique à celle du véhicule (1) lorsqu'elle est vue de dessus.

4. Système de commande selon l'une quelconque des revendications 1 à 3, dans lequel
l'unité de projection (60) comporte un projecteur avant (7F) disposé sur un pare-chocs avant (5) du véhicule (1).

5. Système de commande selon l'une quelconque des revendications 1 à 4, dans lequel
l'unité de projection (60) comporte un projecteur arrière (7R) disposé sur un pare-chocs arrière (6) du véhicule (1), et est configurée pour projeter l'élément de projection (7) sur une surface de route sur un côté arrière du véhicule (1) après que l'unité de commande de déplacement (13) a arrêté le véhicule (1) à la position d'arrêt (82).

6. Système de commande selon la revendication 1, dans lequel
le véhicule (1) comporte une unité opérationnelle (3) pour une opération effectuée par un opérateur.

7. Système de commande selon la revendication 6, dans lequel
le véhicule (1) est un véhicule à ordures comprenant une entrée d'ordures (3A) sur une partie arrière du véhicule (1), l'entrée d'ordures (3A) servant d'unité opérationnelle (3).

8. Système de commande selon l'une quelconque des revendications 1 à 7, comportant en outre
une caméra (20) configurée pour prendre une image autour du véhicule (1),
l'unité de réglage de position d'arrêt (12) étant configurée pour régler la position d'arrêt (82) en référence à des informations de l'image prise par la caméra (20).

9. Système de commande selon la revendication 7, comportant en outre
une caméra (20) configurée pour prendre une image autour du véhicule (1),
l'unité de réglage de position d'arrêt (12) étant configurée pour régler, lors de la détection d'ordures (9A) accumulées au niveau d'une station de collecte des ordures (9) existant à l'avant de la direction de déplacement du véhicule (1) au moyen de la caméra (20), la position d'arrêt (82) sur la base d'une position des ordures détectées.
